# EUROPÄISCHE PATENTSCHRIFT

(11) **EP 1 171 694 B1**
(45) Veröffentlichungstag und Bekanntmachung des Hinweises auf die Patenterteilung: **23.10.2002**
(21) Anmeldenummer: 00934889.7
(22) Anmeldetag: 11.04.2000
(51) Int. Cl.: F01L 9/04

(54) **STEUERANLAGE UND VERFAHREN ZUM BETRIEB EINER BRENNKRAFTMASCHINE**
CONTROL DEVICE AND METHOD FOR OPERATING AN INTERNAL COMBUSTION ENGINE
DISPOSITIF DE COMMANDE ET PROCEDE POUR L'EXPLOITATION D'UN MOTEUR A COMBUSTION INTERNE

(30) Priorität: 21.04.1999 DE 19918094
(43) Veröffentlichungstag der Anmeldung: 16.01.2002
(73) Patentinhaber: SIEMENS AKTIENGESELLSCHAFT, 80333 München (DE)
(72) Erfinder: EICHENSEHER, Volker, D-93176 Beratzhausen (DE); HARTKE, Andreas, D-80807 München (DE); VOGT, Thomas, D-93049 Regensburg (DE)
(86) Internationale Anmeldenummer: DE0001118
(87) Internationale Veröffentlichungsnummer: WO00063536

(56) Entgegenhaltungen:
- EP-A- 0 724 067
- EP-A- 0 810 350
- WO-A-98/55752
- DE-A- 19 733 142
- US-A- 5 765 514

## Beschreibung

Die Erfindung betrifft ein Verfahren und eine Steueranlage zum Betrieb einer gemischansaugenden Brennkraftmaschine gemäß den Oberbegriffen der Ansprüche 1 und 2.

Brennkraftmaschinen, deren Gaswechselventile elektromechanisch betätigt werden, sind bekannt. Im Gegensatz zu nockenwellenbetätigten Ventilen werden diese Ventile zum Öffnen und Schließen in Abhängigkeit von der Drehlage der Kurbelwelle angesteuert; eine feste mechanische Kopplung mit der Kurbelwelle liegt nicht vor. Elektromechanische Stellglieder für Gaswechselventile könnten unterschiedliche Bauweise haben. In EP 0 493 634 A1 sind beispielsweise Gaswechselventile beschrieben, die von einer Ventilfeder geschlossen und einem Elektromagneten geöffent werden. Die Gaswechselventile aus DE 297 19 502 U1 oder EP 0 724 067 A1 weisen dagegen eine zwischen einer geschlossenen und einer offenen Stellung liegende Ruhestellung auf, aus der sie mittels Elektromagneten ausgelenkt werden können. Sie werden im folgenden als Zwei-Federn-Ventile bezeichnet.

Um ein solches Zwei-Federn-Ventil zu öffnen oder zu schließen, wird die jeweilige Wicklung bestromt, wobei der erforderliche Strom in der Fangphase größer ist als in der Haltephase, in der das Ventil in einer Endstellung gehalten wird.

Während bei herkömmlichem, nockenwellenbetätigtem Ventiltrieb eine Vorgabe der Steuerzeiten im Betriebssteuergerät der Brennkraftmaschine nicht anfällt, müssen bei elektromechanisch betätigten Ventilen entsprechende Steuerzeiten berechnet und vorgegeben werden.

Brennkraftmaschinen mit elektromechanisch betätigten Ventilen haben deshalb in der Regel zusätzlich zum normalen Betriebssteuergerät der Brennkraftmaschine ein Steuergerät für die elektromechanisch betätigten Ventile, das aus dem Kurbelwellenstellungssignal und den Vorgaben des Betriebssteuergerätes die Ansteuerung der elektromechanisch betätigten Ventile vornimmt.

In der EP 0 493 634 A1 ist zusätzlich zu den elektromagnetisch betätigten Gaswechselventilen ein elektromagnetisch betätigtes Hilfsventil vorgesehen, das parallel zum Auslaßventil liegt und zeitlich vor diesem geöffnet wird, um den Druck, gegen den das Auslaßventil geöffnet werden muß, abzusenken. Alle Ventile haben eine geschlossene Ruhestellung. Bei Ausfall bleibt dieses Hilfsventil bauartbedingt geschlossen. Dann wird der entsprechende Zylinder stillgelegt.

Bei einem Ausfall der elektromechanischen Betätigung eines Zwei-Federn-Ventils, der beispielsweise durch einen Ausfall des Stellgliedes, der das Stellglied ansteuernden Endstufe oder einen Fehler im Steuergerät erfolgen kann und u.U. auch nur kurzzeitig vorliegt, bleibt dagegen das betreffende Ventil unerwünscht geöffnet.

Tritt ein solcher Ausfall bei einem Einlaßventil auf, kann es zur Zündung ins Saugrohr bzw. in den Ansaugtrakt hinein kommen.

Tritt ein solcher Ausfall bei einem Auslaßventil auf, kann es zur Zündung im Abgastrakt und zu Schäden an der Abgasreinigungsanlage kommen.

Es ist deshalb Aufgabe der Erfindung, ein Verfahren und eine Steueranlage für eine Brennkraftmaschine mit elektromechanisch betätigten Gaswechselventilen anzugeben, die eine halb offene Ruhestellung haben, so daß auch bei Ausfall eines elektromechanisch betätigten Gaswechselventils eine unerwünschte Zündung von Kraftstoff/Luft-Gemisch in den Ansaugoder Abgastrakt hinein vermieden werden kann.

Diese Aufgabe wird durch die in den Ansprüchen 1 und 2 gekennzeichnete Erfindung gelöst.

Erfindungsgemäß wird bei Ausfall eines Gaswechselventils, durch den dieses offen bliebe, die Zündung beispielsweise durch Eingriff an der Zündspule abgeschaltet und/oder die Einspritzung unterdrückt. Dadurch wird bei Erkennen eines Ventilversagens kein zündfähiges Kraftstoff/Luft-Gemisch zumindest im betroffenen Zylinder erzeugt oder gezündet, wodurch eine unerwünschte Zündung in den Ausgang- oder Abgastrakt hinein ausgeschlossen ist.

Die Abschaltung der Einspritzung und die Zündunterdrückung kann für alle Zylinder erfolgen, ist aber auch zylinderselektiv möglich.

In einer vorteilhaften Ausgestaltung der Erfindung meldet ein Steuergerät für die elektromechanisch betätigten Einlaßventile ein Versagen eines Ventils an das Betriebssteuergerät der Brennkraftmaschine, das daraufhin die Einspritzung und/oder Zündung mindestens für den betroffenen Zylinder unterbindet.

Vorteilhafte Ausgestaltungen der Erfindung sind in den Unteransprüchen gekennzeichnet.

Die Erfindung wird nachfolgend unter Bezugnahme auf die Zeichnung näher erläutert. Die Zeichnung zeigt:
Fig. 1 eine schematische Darstellung einer Schaltung eines Steuergerätes für elektromechanisch betätigte Gaswechselventile einer 4-Zylinderbrennkraftmaschine,
Fig. 2 eine schematische Darstellung einer Brennkraftmaschine mit Einspritzanlage und elektromechanischem Ventiltrieb und
Fig. 3 eine schematische Darstellung der Schaltung zwischen Ventilsteuergerät, Betriebssteuergerät und Einspritzanlage.

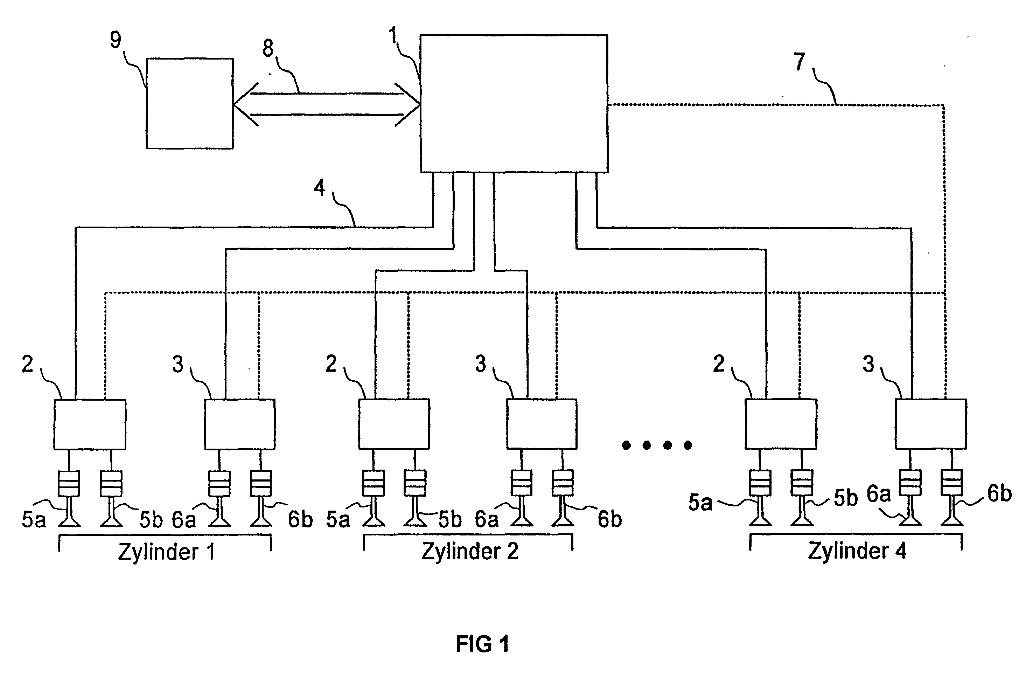

Die Schaltung der Fig. 1 dient zur Ansteuerung elektromechanisch angetriebener Zwei-Feder-Gaswechselventile 5a, 5b, 6a, 6b. Ein solches elektromechanisch angetriebenes Zwei-Feder-Gaswechselventil ist beispielsweise in dem deutschen Gebrauchsmuster 297 12 502 U1 beschrieben. Für das Verständnis dieser Erfindung ist dabei nur wesentlich, daß das elektromechanisch betätigte Gaswechselventil durch die Bestromung zweier Spulen betätigt wird, wobei eine Spule für das Schließen, die andere für das Öffnen des Gaswechselventils verantwortlich ist. Die Spulen lenken das Ventil aus einer Ruhestellung aus, in der das Ventil halb offen ist. Die Ruhestellung liegt vorzugsweise in der Nähe des halben Hubes des Ventils.

In Fig. 1 ist schematisch die Schaltung des Ventilsteuergerätes für eine 4-Zylinderbrennkraftmaschine dargestellt, jedoch ist diese Zylinderzahl nur beispielhaft zu verstehen. Ein Zylinder hat in diesem Beispiel zwei Einlaßventile 5a, 5b sowie zwei Auslaßventile 6a, 6b. Für die Einlaß- bzw. die Auslaßventile 5a, 5b bzw. 6a, 6b ist jeweils ein eigener Aufsetzregler 2 bzw. 3 vorgesehen. Der Aufsetzregler 2, 3 steuert Endstufen an, die die Bestromung der jeweiligen Spulen des Gaswechselventils 5a, 5b, 6a, 6b bewerkstelligen. Dabei ist beispielsweise für jede Spule eine eigene Endstufe vorgesehen. Der Aufsetzregler 2, 3 und die Endstufen sind in einem Gehäuse untergebracht, das an den Kühlkreislauf der Brennkraftmaschine angeschlossen ist, um gleichmäßige Wärmeabfuhr zu gewährleisten.

Der Aufsetzregler 2, 3 steuert die Endstufen eines Ventils 5, 6 abhängig von Zeitsteuersignalen an, die anzeigen, wann das jeweilige Ventil zu öffnen oder zu schließen hat. Für die Einlaß- und die Auslaßventile jedes Zylinders gibt es ein eigenes Zeitsteuersignal. Bei einer Brennkraftmaschine mit mehr als zwei Ventilen pro Zylinder kann auch für jedes Ventil ein eigenes Zeitsteuersignal vorgesehen werden.

Die Zeitsteuersignale werden den Aufsetzreglern 2, 3 von einem Kommunikationsrechner 1 über eine unidirektionale Kommunikationsleitung 4 zugeführt. Jeder Aufsetzregler 2, 3 ist über eine weitere, serielle SPI-BUS Schnittstelle mit dem Kommunikationsrechner 1 verbunden und meldet den Zustand der Ventile 5a, 5b, 6a, 6b bzw. einen eventuellen Ventilausfall über diese Schnittstelle.

Der Kommunikationsrechner 1 ist an einen CAN-BUS 8 angeschlossen und führt darüber die Kommunikation mit dem Betriebssteuergerät 9 der Brennkraftmaschine durch. Eine solche BUS-Verbindung ist beispielsweise in W. Lawrenz, CAN-Controller Area Network, Hüthig Verlag, 1994, ISBN 3-7785-2263-7 beschrieben. Der Kommunikationsrechner 1 ist vorteilhafterweise im selben gekühlten Gehäuse untergebracht wie die Aufsetzregler 2, 3 und die Endstufen. Weiter erhält er das Kurbelwellensignal und berechnet daraus zusammen mit den Anforderungen des Betriebssteuergerätes die Zeitsteuersignale für die Aufsetzregler 2, 3 und gibt sie über die unidirektionalen Kommunikationsleitungen 4 an die Aufsetzregler 2, 3 aus. Über den SPI-BUS 7 kommuniziert er zusätzlich mit den Aufsetzreglern 2, 3 und tauscht die Zustandsinformationen bzw. Fehlerinformationen aus.

Im Betrieb eines elektromechanischen Ventils kann es vorkommen, daß das Ventil nicht wie gewünscht öffnet oder schließt. Insbesondere bei dem aus dem deutschen Gebrauchsmuster 297 12 502 U1 bekannten elektromechanischen Stellglied für das Gaswechselventil kann es passieren, daß das Gaswechselventil beim Wechsel von einer Endstellung zur anderen in der halboffenen bzw. halbgeschlossenen Ruhestellung verbleibt. Aus dieser Ruhestellung kann das Ventil durch geeignetes Betätigen der Elektromagneten wieder angeschwungen werden und in die gewünschte Endstellung gebracht werden. Dies dauert jedoch eine gewisse Zeitspanne. Weiter ist ein Ventilversagen möglich, wenn z.B. eine der Endstufen für die Elektromagneten, die Ansteuerleitung oder der Aufsetzregler 2,3 respektive die Kommunikationsleitung 4 einen Defekt zeigt.

Tritt ein solches Ventilversagen auf, so hätte das eine Zündung des Kraftstoff/Luft-Gemisches bei nicht geschlossenem Ventil zur Folge. Es ergäbe sich bei einem Einlaßventil 5a, 5b eine Zündung in den offenen Ansaugtrakt der Brennkraftmaschine bzw. des betroffenen Zylinders hinein.
Analoges gilt für das Versagen eines Auslaßventiles 6a, 6b.

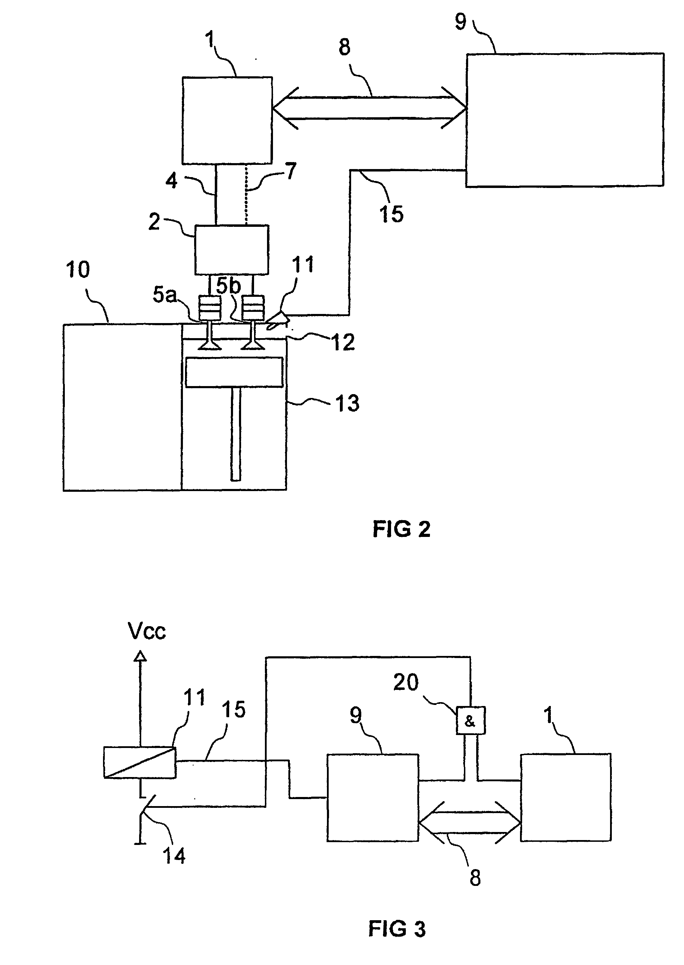

In Fig. 2 sind diese Verhältnisse in einer Schemadarstellung genauer dargestellt. Hier sind für einen Zylinder 13 einer Brennkraftmaschine 10 die Einlaßventile 5a, 5b sowie stellvertretend für die gesamte Einspritzanlage ein Einspritzventil 11 gezeigt, das die Einspritzungen in den Ansaugtrakt 12 des Zylinders 13 vornimmt. Die schematische Darstellung zeigt nur einen Zylinder 13 der Brennkraftmaschine 10. Ebenso sind nur die Einlaßventile 5a, 5b dargestellt, die Auslaßventile sind in Fig. 2 nicht enthalten. Schließlich ist von der Einspritzanlage 11 nur schematisch das Einspritzventil gezeigt, selbstverständlicherweise ist die Einspritzanlage 11 in der Regel um einiges komplexer. So kann es sich auch um Direkteinspritzanlagen handeln. Diese Einspritzanlage 11 wird über eine Steuerleitung 15 vom Betriebssteuergerät 9 der Brennkraftmaschine geeignet angesteuert.

Weiter hat die Brennkraftmaschine 10 für jeden Zylinder 13 eine Zündkerze (nicht dargestellt), die Teil einer Zündanlage mit mindestens einer Zündspule ist.

Stellt nun der Kommunikationsrechner 1 einen Defekt im Ventiltrieb des elektromechanisch betätigten Einlaßventils 5a, 5b fest, der dazu führt, daß ein elektromechanisch betätigtes Einlaßventil 5a, 5b nicht mehr vollständig schließt, so meldet er dies über den CAN-BUS 8 an das Betriebssteuergerät 9.

Das Betriebssteuergerät 9 kann nun auf zwei Arten reagieren. Es kann über einen Eingriff an der Zündanlage die Zündung im betroffenen Zylinder unterdrücken. Alternativ kann es die Einspritzung abschalten.

Da ein Eingriff an der Zündanlage in der Regel an einer Zündspule erfolgen wird, was aufwendig ist, wird das Betriebssteuergerät 9 bevorzugt die Einspritzanlage 11 geeignet ansteuern, und die Zündung nur dann unterbrechen, wenn zum Zeitpunkt des Erkennens eines Ventilausfalls eine Einspritzung schon stattgefunden hat.

Dazu veranlaßt das Betriebssteuergerät über die Steuerleitung 15 die Einspritzanlage 11 dazu, keine Einspritzung mehr in den Ansaugtrakt 12 des betroffenen Zylinders 13 vorzunehmen. Dadurch ist das Entstehen eines unerwünscht zündbaren Kraftstoff/Luft-Gemisches im betroffenen Zylinder 13 vermieden. Ein Zünden in den Ansaugtrakt 12 ist nicht möglich.

In Fig. 3 ist eine Schaltung einer bevorzugten Ausführungsform dargestellt. Das Betriebssteuergerät 9 und der Kommunikationsrechner 1 der elektromechanischen Ventilsteueranlage steuern jeweils einen Eingang eines UND-Gliedes 20 an, dessen Ausgang mit einem in der Spannungsversorgung der Einspritzanlage 11 befindlichen Schalter 14 verbunden ist. Der Kommunikationsrechner 1 und das Betriebssteuergerät 9 sind darüber hinaus, wie bereits erwähnt, an einen gemeinsamen CAN-BUS 8 angeschlossen. Darüber hinaus hat das Betriebssteuergerät 9 über die Steuerleitung 15 weitere Eingriffsmöglichkeiten an der Einspritzanlage 11. Über die Steuerleitung 15, die auch als bidirektionale Kommunikationsleitung ausgeführt sein kann, weist das Betriebssteuergerät 9 normalerweise das Ausführen von Einspritzungen an. Bei entsprechend ausgebildeten Einspritzanlagen 11 kann die Einspritzung auch zylinderselektiv erfolgen.

Sind beide Eingänge des UND-Gliedes 20 auf einem High-Pegel, so ist der Schalter 14 in der Energieversorgung der Einspritzanlage 11 geöffnet. Das Betriebssteuergerät 9 legt standardmäßig einen High-Pegel an den einen Eingang des UND-Gliedes 20, der Kommunikationsrechner 1 einen Low-Pegel. Stellt der Kommunikationsrechner 1 ein Versagen eines der Einspritzventile 5 der Brennkraftmaschine 10 fest, legt er ebenfalls einen High-Pegel an den anderen Eingang des UND-Gliedes 20, wodurch der Schalter 14 öffnet und die Stromversorgung der Einspritzanlage 11 unterbrochen ist. Gleichzeitig meldet der Kommunikationsrechner 1 über den CAN-BUS 8 an das Betriebssteuergerät 9, welches Ventil ausgefallen ist bzw. welcher Zylinder vom Ausfall betroffen ist. Da die Kommunikation über den CAN-BUS aber in der Regel nur alle 180° Kurbelwellenwinkel stattfindet, dauert es zusammen mit Programmlaufzeiten im Kommunikationsrechner 1 und dem Betriebssteuergerät 9 eine gewisse Zeit, bis das Betriebssteuergerät 9 in der Lage ist, die Einspritzung über die Steuerleitung 15 an der Einspritzanlage 11 zylinderselektiv so zu gestalten, daß die Einspritzung am betroffenen Zylinder 13 unterbleibt. Ist das Betriebssteuergerät 9 in der Lage, diese zylinderselektive Einspritzregelung der Einspritzanlage 11 vorzunehmen, schaltet es den High-Pegel am Eingang des UND-Gliedes 20 ab, wodurch der Schalter 14 schließt und die Einspritzanlage wieder mit Energie versorgt wird.

Dann weist das Betriebssteuergerät 9 über den CAN-BUS 8 den Kommunikationsrechner 1 an, keinen High-Pegel mehr an den Eingang des UND-Gliedes 20 zu legen. Ist dies erfolgt, kann das Betriebssteuergerät 9 wieder einen High-Pegel an den Eingang des UND-Gliedes legen, ohne daß der Schalter 14 öffnet, womit der Ausgangszustand erreicht wäre.

Vorteilhafterweise unterbricht der Schalter 14 in der Schaltung der Fig. 3 lediglich die Versorgungsspannung der Einspritzventile, so daß diese nicht mehr öffnen können. Der Rest der Einspritzanlage 11, insbesondere eventuelle Steuergeräte sollten natürlich mit Energie versorgt bleiben.

Anstelle den Kommunikationsrechner 1 auf beschriebene Weise mit dem UND-Glied 20 zuverknüpfen, kann man natürlich entsprechende Ausgänge der Aufsetzregler 2, 3 sowie den Ausgang des Kommunikationsrechners 1 mit einem ODER-Glied verknüpfen und dessen Ausgang an den Eingang des UND-Gliedes 20 einspeisen. Durch diese Verknüpfung ist dann ein beliebiger Regler der Ventilsteueranlage in der Lage, die Einspritzung zu unterbrechen, wenn er ein Ventilversagen feststellt. Dies kann weiter so fortgebildet werden, daß alle Baugruppen, die in der Lage sind, eine fehlerhafte Funktion eines Ventiles festzustellen, mit einer entsprechenden Signalleitung ODER verknüpft werden und an den Eingang des UND-Gliedes 20 angeschlossen werden.

Schließlich kann auch auf die Verknüpfung mit dem UND-Glied 20 verzichtet werden und stattdessen ein direkter Zugriff auf den Schalter 14 in der Energieversorgung der Einspritzanlage 11 durch den Kommunikationsrechner 1 zugelassen werden.

Eine analoge Schaltung ist auch für den Eingriff an der Zündanlage möglich, wobei hier noch zusätzlich Vorkehrungen zum Schutz der Zündspule vor Überspannung und zum Entladen der Zündspule getroffen werden müssen.

## Patentansprüche

1. Steueranlage für eine gemischsaugende Brennkraftmaschine (10) mit einem Ansaugtrakt (12), elektromechanisch betätigten Gaswechselventilen (5), die eine halb offene Ruhelage haben und von zwei Elektromagneten in die geschlossene und die offene Endstellung gebracht und dort gehalten werden, und einer Einspritzanlage (11) und einer Zündanlage, die beide von einer Steuereinrichtung (1, 2, 3, 8, 9) angesteuert werden, wobei die Steuereinrichtung (1, 2, 3, 8, 9) so ausgebildet ist, dass sie die Funktionsfähigkeit der Gaswechselventile (5) überwacht und bei Versagen eines Gaswechselventils (5) durch das dieses nicht oder nicht vollständig schließt, die Einspritzung an der Einspritzanlage (11) unterbindet, um eine unerwünschte Zündung von Kraftstoff/Luft-Gemisch zu verhindern,
**dadurch gekennzeichnet, dass** die Steuereinrichtung mehrere Baugruppen (1, 2,3) umfasst, die jeweils in der Lage sind, eine fehlerhafte Funktion der Gaswechselventile (5) festzustellen, und dass diese Baugruppen (1, 2, 3) jeweils über eine Signalleitung mit dem Eingang eines ODER-Gliedes verknüpft sind, dessen Ausgang die Einspritzanlage (11) und/oder die Zündanlage ansteuert.

2. Steueranlage nach Anspruch 1,
**dadurch gekennzeichnet, dass** die Baugruppen (1, 2, 3) den Gaswechselventilen (5) zugeordnete Aufsetzregler (2, 3) und ein mit diesen verbundenes Ventil-Steuergerät (1) umfassen.

3. Steueranlage nach Anspruch 2,
**dadurch gekennzeichnet, dass** der Ausgang des ODER-Gliedes eine direkte Eingriffsmöglichkeit oder über ein Betriebssteuergerät (9) eine indirekte Eingriffsmöglichkeit an der Einspritzanlage (11) und/oder Zündanlage hat.

4. Steueranlage nach Anspruch 2 oder 3,
**dadurch gekennzeichnet, dass** die Steuereinrichtung (1, 2, 3, 8, 9) so ausgebildet ist, dass sie über einen Schalter (14) die Spannungsversorgung mindestens eines Teils der Einspritzanlage (11) und/oder der Zündanlage abschaltet.

5. Steueranlage nach Anspruch 3 oder 4,
**dadurch gekennzeichnet, dass** die Steuereinrichtung so ausgebildet ist, dass das Ventil-Steuergerät (1) bei Versagen eines Gaswechselventils (5) zuerst die Einspritzung an der Einspritzanlage (11) und/oder die Zündung an der Zündanlage für alle Zylinder unterbindet und zugleich an das Betriebssteuergerät (9) eine Meldung abgibt, um den Eingriff des Ventil-Steuergerätes (1) an der Einspritzanlage (11) und/oder der Zündanlage zu überbrücken und eine zylinderselektive Abschaltung der Einspritzanlage (11) und/oder der Zündanlage zu bewirken, bei der nur derjenige Zylinder (13) abgeschaltet ist, dessen Gaswechselventil (5) versagt.

## Claims

1. Control unit for a fuel/air intake mixture internal combustion engine (10) with an intake duct (12), electromechanically activated gas flow valves (5), which have a half-open neutral position and are moved into their closed and open end positions and held there by two electromagnets, and an injection unit (11) and an ignition unit, both of which are operated by a control device (1, 2, 3, 8, 9), with the control device (1, 2, 3, 8, 9) configured such that it monitors the operational capacity of the gas flow valves (5) and in the event of failure of a gas flow valve (5), as a result of which this does not close or does not close completely, injection is terminated at the injection unit (11), to prevent unwanted ignition of the fuel/air mixture, **characterised in that** the control device contains a plurality of components (1, 2, 3), each of which is able to detect incorrect operation of the gas flow valves (5) and that these components (1, 2, 3) are each linked via a signal line to the input of an OR-gate, the output of which controls the injection unit (11) and/or the ignition unit.

2. Control unit according to Claim 1, **characterised in that** the components (1, 2, 3) include yoke-type regulators (2, 3) assigned to the gas flow valves (5) and a valve control device (1) connected to these.

3. Control unit according to Claim 2, **characterised in that** the output of the OR-gate offers the option of direct intervention or indirect intervention via an operation control device (9) to the injection unit (11) and/or ignition unit.

4. Control unit according to Claim 2 or 3, **characterised in that** the control device (1, 2, 3, 8, 9) is configured such that it uses a switch (14) to terminate the voltage supply to at least part of the injection unit (11) and/or the injection unit.

5. Control unit according to Claim 3 or 4, **characterised in that** the control device is configured such that, in the event of failure of a gas flow valve (5), the valve control device (1) first terminates injection at the injection unit (11) and/or ignition at the ignition unit for all cylinders and at the same time reports to the operation control device (9) that intervention by the valve control device (1) at the injection unit (11) and/or the ignition unit should be bypassed and cylinder-selective disconnection of the injection unit (11) and/or the ignition unit should be implemented, whereby only the cylinder (13) whose gas flow valve (5) has failed is disconnected.

## Revendications

1. Installation de commande pour un moteur à combustion interne (10) aspirant un mélange, comportant un collecteur d'aspiration (12), des soupapes de changement des gaz (5) actionnées électromécaniquement, qui ont une position de repos semi-ouverte et qui sont mises dans la position finale fermée et dans la position finale ouverte, et y sont maintenues, par deux électroaimants, et comportant un dispositif d'injection (11) et un dispositif d'allumage, tous deux commandés par un dispositif de commande (1, 2, 3, 8, 9), le dispositif de commande (1, 2, 3, 8, 9) étant réalisé de telle façon qu'il surveille l'aptitude fonctionnement des soupapes de changement des gaz (5) et qu'en cas de défaillance d'une soupape de changement des gaz (5), par laquelle cette soupape ne se ferme pas ou pas complètement, le dispositif de commande interrompe l'injection au niveau du dispositif d'injection (11), pour éviter un allumage intempestif du mélange carburant/air,
**caractérisée en ce que** le dispositif de commande comporte plusieurs groupes de composants (1, 2, 3) qui sont chacun capables de détecter un fonctionnement défectueux des soupapes de changement des gaz (5), et **en ce que** ces groupes de composants (1, 2, 3) sont chacun reliés, par l'intermédiaire d'un conducteur de signaux, à l'entrée d'un élément "OU", dont la sortie commande le dispositif d'injection (11) et le dispositif d'allumage.

2. Installation de commande suivant la revendication 1, **caractérisée en ce que** les groupes de composants (1, 2, 3) comportent un régulateur de positionnement (2, 3) associé aux soupapes de changement des gaz (5), et un appareil de commande de soupapes (1) relié à celles-ci.

3. Installation de commande suivant la revendication 2, **caractérisée en ce que** la sortie de l'élément "OU" permet une intervention directe ou une intervention indirecte, par l'intermédiaire d'un appareil de commande de fonctionnement 9, sur le dispositif d'injection (11) et/ou sur le dispositif d'allumage.

4. Installation de commande suivant la revendication 2 ou la revendication 3, **caractérisée en ce que** le dispositif de commande (1, 2, 3, 8, 9) est réalisé de telle façon qu'il coupe, par un commutateur (14), l'alimentation en tension d'au moins une partie du dispositif d'injection (11) et/ou du dispositif d'allumage.

5. Installation de commande suivant la revendication 3 ou la revendication 4, **caractérisée en ce que** le dispositif de commande est réalisé de telle façon qu'en cas de défaillance d'une soupape de changement des gaz (5), le dispositif de commande de soupapes (1) coupe d'abord l'injection sur le dispositif d'injection (11) et/ou l'allumage sur le dispositif d'allumage, et envoie, en même temps, un message à l'appareil de commande de fonctionnement (9) pour court-circuiter la commande de l'appareil de commande de soupapes (1) sur le dispositif d'injection (11) et/ou sur le dispositif d'allumage, et pour provoquer une coupure, sélective par cylindre, du dispositif d'injection (11) et/ou du dispositif d'allumage, coupure par laquelle est seulement coupé le cylindre concerné (13) dont la soupape de changement des gaz (5) présente une défaillance.
